# EUROPÄISCHE PATENTSCHRIFT

(11) **EP 2 566 713 B1**
(45) Veröffentlichungstag und Bekanntmachung des Hinweises auf die Patenterteilung: **20.08.2014**
(21) Anmeldenummer: 11730868.4
(22) Anmeldetag: 05.05.2011
(51) Int. Cl.: B60J 5/08

(54) **ROLLLADENSYSTEM FÜR EINEN KRAFTFAHRZEUG-AUFBAU**
ROLLER SHUTTER SYSTEM FOR A MOTOR VEHICLE BODY
SYSTÈME DE VOLET ROULANT POUR UNE CARROSSERIE DE VÉHICULE À MOTEUR

(30) Priorität: 06.05.2010 AT 7612010
(43) Veröffentlichungstag der Anmeldung: 13.03.2013
(73) Patentinhaber: Rosenbauer International Aktiengesellschaft, 4060 Leonding (AT)
(72) Erfinder: KIESENHOFER, Florian, A -4294 St. Leonhard bei Freistadt (AT); RONACHER, Alexander, A-4063 Hörsching (AT); STADLER, Bernhard, A-4144 Oberkappel (AT)
(74) Vertreter: Burger, Hannes
(86) Internationale Anmeldenummer: PCT/AT2011/000215
(87) Internationale Veröffentlichungsnummer: WO 2011/137475

(56) Entgegenhaltungen:
- EP-A2- 1 067 268
- DE-A1- 19 823 853

## Beschreibung

Die Erfindung betrifft ein Rollladensystem wie es im Oberbegriff des Anspruches 1 beschrieben ist. Ein solches Rolllandensystem ist aus DE 198 23 853 bekannt.

Aus dem Dokument DE 20 2006 010 974 U1 ist ein Einsatzfahrzeug, insbesondere Feuerwehrfahrzeug, mit einem Fahrzeugaufbau, dem wenigstens ein Rollladensystem zugeordnet ist, bekannt. Dieses weist wenigstens einen, zwischen einer eine Schließ- und Offenstellung eine Ladeöffnung des Fahrzeugaufbaus verstellbaren Rollladenpanzer auf und ist als Rollladenmodul ausgebildet, das an wenigstens einer Außenfläche des Fahrzeugaufbaus angesetzt und über Befestigungsmittel befestigt ist.

Aus einem weiteren Dokument, DE 100 60 345 A1, ist eine Führungseinrichtung für Rollläden oder dergleichen bekannt. Eine Führungsschiene für den Rollladen, weist einen im Wesentlichen U-förmigen Profilquerschnitt auf. Die Führungsschiene ist dermaßen ausgebildet, dass sich zumindest einer von den U-förmigen Querschnitt bildenden Schenkeln aus einer ersten Stellung, in der der Rollladen zwischen den beiden Schenkeln der Führungsschiene verstellbar geführt ist in eine zweite Stellung verschwenken lässt, in der der Rollladen in seiner gestreckten Abwicklung in die Führungsschiene eingelegt bzw. aus der Führungsschiene entnommen werden kann.

Schließlich ist aus dem Dokument DE 103 13 429 A1 eine Rollladenvorrichtung für Einsatzfahrzeuge, insbesondere Feuerwehrfahrzeuge bekannt, bei der eine Rollladenverriegelung mit einer am Rollladen in Schwenklagern angeordneten Hubstange betätigbar ist, und der Rollladen gegen Öffnen gesichert ist wobei in einer Rollladenlamelle zumindest ein Riegelelement in Längsrichtung der Lamelle durch eine Schwenkbewegung der Hubstange verstellbar angeordnet ist.

Aufgabe der Erfindung ist es ein Rollladensystem mit einem Rollladenpanzer für einen Kraftfahrzeug-Aufbau zu schaffen, welcher flächenbündig in den Aufbau umgrenzenden Wänden integrierbar ist.

Diese Aufgabe der Erfindung wird durch die im Kennzeichenteil des Anspruches 1 wiedergegebenen Merkmale erreicht. Der überraschende Vorteil dabei ist, dass Führungsbahnen für den Rollladenpanzer ausbildende Führungsanordnungen unmittelbar an den einen Innenraum unterteilenden Trennelementen motiert werden und eine abdichtende wie auch stabilisierende Verbindung von Außenwandteilen und mit Trennelementen bei Vereinfachung des Montageaufwandes gewährleisten.

Vorteilhaft sind dabei Ausbildungen nach den Ansprüchen 2 und 3, wodurch Rollladensysteme sowohl aneinandergrenzend in Außenwänden wie auch im unmittelbaren Anschluss an Stirn- oder Rückwänden integrierbar sind.

Vorteilhaft sind aber auch die Ausbildungen nach den Ansprüchen 4 und 5, weil dadurch die Positionierung und Befestigung des Führungsprofils am Aufbau in Kombination mit einem weiteren Führungsprofil erreicht wird und die Montage des Rollladenpanzers wesentlich vereinfacht wird,

Gemäß der vorteilhaften Ausbildung wie sie im Anspruch 6 beschrieben ist, wird eine hohe Verwendungssteifigkeit der Führungsprofile erreicht.

Durch die in den Ansprüchen 7 und 8 beschriebenen, vorteilhaften Weiterbildungen werden zusätzliche Montagehilfsmittel eingespart.

Die vorteilhaften Ausbildungen gemäß den Ansprüchen 9 und 10 gewährleisten eine geringe Gleitreibung, wodurch der Rollladenpanzer leichtgängig in den Führungsanordnungen gleitet.

Die vorteilhafte Ausbildung, wie sie im Anspruch 11 beschrieben ist, bewirkt eine hohe Abriebfestigkeit des den Außenabschluss ausbildende Abdeckprofil.

Vorteilhaft sind Dichtlippen am Abdeckprofil, wodurch ein staub- und feuchtigkeitsdichter Anschluss an den Rollladenpanzer erreicht wird.

Vorteilhaft ist aber auch eine Öffnungs- und Verschlusseinrichtung, wie sie in den Ansprüchen 13 bis 15 beschrieben ist, wodurch ein sicherer Abschluss der Bedienöffnung des Kraftfahrzeugaufbaus erreicht wird und eine einfache und rasche Bedienbarkeit und damit Zugänglichkeit zum Innenraum des Kraftfahrzeugaufbaus bei einem Einsatzfall gewährleistet ist.

Zum besseren Verständnis der Erfindung wird diese anhand der nachfolgenden Figuren näher erläutert.

Es zeigen jeweils in stark schematisch vereinfachter Darstellung:
- Fig. 1: ein Kraftfahrzeug mit einem erfindungsgemäßen Rollladesystem in vereinfachter Ansicht;
- Fig. 2: ein Geräte-Aufbau mit dem erfindungsgemäßen Rollladensystemen in Draufsicht, teilweise geschnitten;
- Fig. 3: der Geräte-Aufbau geschnitten gemäß den Linien III in Fig. 2;
- Fig. 4: eine Führungsanordnung des erfindungsgemäßen Rollladensystems, geschnitten;
- Fig. 5: eine andere Ausbildung der Führungsanordnung des erfindungsgemäßen Rollladensystems, geschnitten;
- Fig. 6: ein Umlenkelement des erfindungsgemäßen Rollladensystems, teilweise geschnitten;
- Fig. 7: eine andere Ausbildung eines Umlenkelements des erfindungsgemäßen Rollladensystems, teilweise geschnitten;
- Fig. 8: das erfindungsgemäße Rollladensystem mit einer Öffnungs- und Verschlusseinrichtung in Ansicht;
- Fig. 9: die Öffnungs- und Verschlusseinrichtung geschnitten gemäß den Linien IX - IX in Fig. 8;
- Fig. 10: die Öffnungs- und Verschlusseinrichtung des erfindungsgemäßen Rollladensystems geschnitten gemäß den Linien X - X in Fig. 8.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

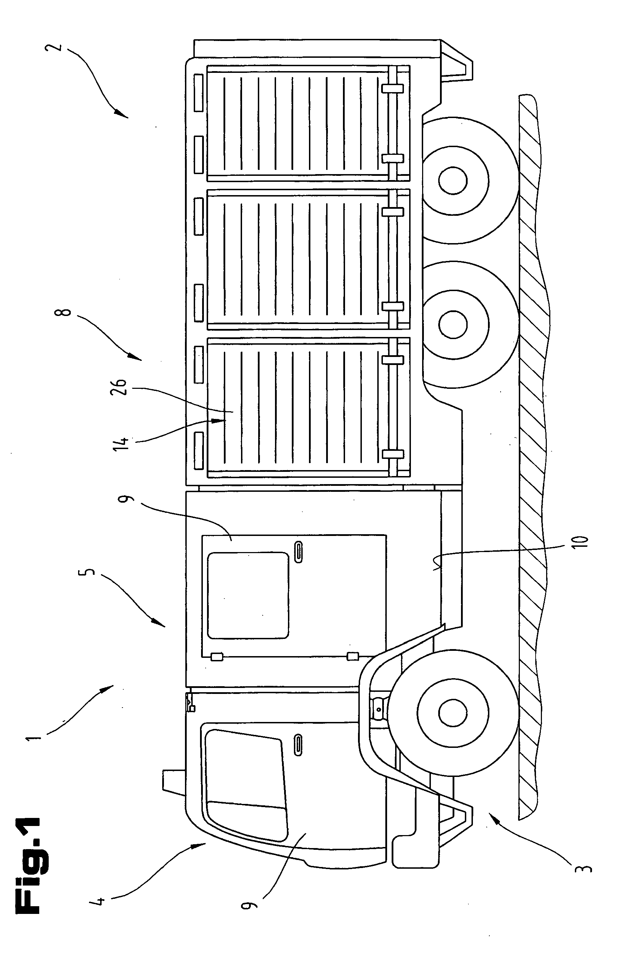

In der Fig. 1 ist ein Lastkraftwagen 1, insbesondere ein Feuerwehr-Einsatzfahrzeug 2 gezeigt. Auf einem Fahrzeugchassis 3 ist nach dem gezeigten Ausführungsbeispiel eine Fahrerkabine 4, eine Mannschaftskabine 5 und ein kastenartiger, bevorzugt durch Trennelemente 6 in verschieden dimensionierte Abteile 7 unterteilter Geräte- Aufbau 8 angeordnet.

Auf weitere Details der Ausstattung des Lastkraftwagens 1, wie sie zum Fahrbetrieb, zur Aufnahme von Personen, Gerätschaften und für einen Hilfseinsatz erforderliche Hilfsmittel zum Umfang der Ausrüstung vorhanden sind, braucht im Einzelnen nicht eingegangen zu werden, da dies entsprechend dem jeweils vorgesehenen Einsatzzweck des Lastkraftwagens 1 und den jeweiligen Bedürfnissen und Vorgaben der Einsatzkräfte angepasst werden eine Selbstverständlichkeit darstellen.

Wesentlich für eine rasche Einsatzbereitschaft des Lastkraftwagens 1 sowie für die Bedienung durch die Einsatzkräfte sowie für den Zugriff zu den Gerätschaften bilden dabei Türen 9 sowie Ein- und Ausstiegshilfen 10, z. B. Auftrittsborde, Treppen, Leitern etc., für die Fahrerkabine 4, Mannschaftskabine 5 sowie Öffnungsverschlüsse 11 des Geräte- Aufbaus 8.

Der Geräte- Aufbau 8 weist nach dem gezeigten Ausführungsbeispiel insbesondere an zumindest einer Seitenwand 12 und/oder einer Rückwand 13 bevorzugt mehrere, voneinander unabhängige, betätigbare Öffnungsverschlüsse 11 auf, welche durch in der Seitenwand 12 und/oder der Rückwand 13 etwa flächenbündig integriert angeordnete Rollladensystemen 14 gebildet sind.

Diese bieten den Vorteil, dass damit großflächige Bedienöffnungen 15 des Gerätschaftsaufbaus 8, die sich über ein oder mehrere der Abteile 7 erstrecken, erreicht werden, ohne dass der Lastkraftwagen 1 von die Bewegung der Einsatzkräfte rund um diesen behindernde Störkonturen aufweist und weiters derartige Rollladensysteme 14 eine rasche Zugänglichkeit zu den einzelnen Abteilen 7 gewährleisten.

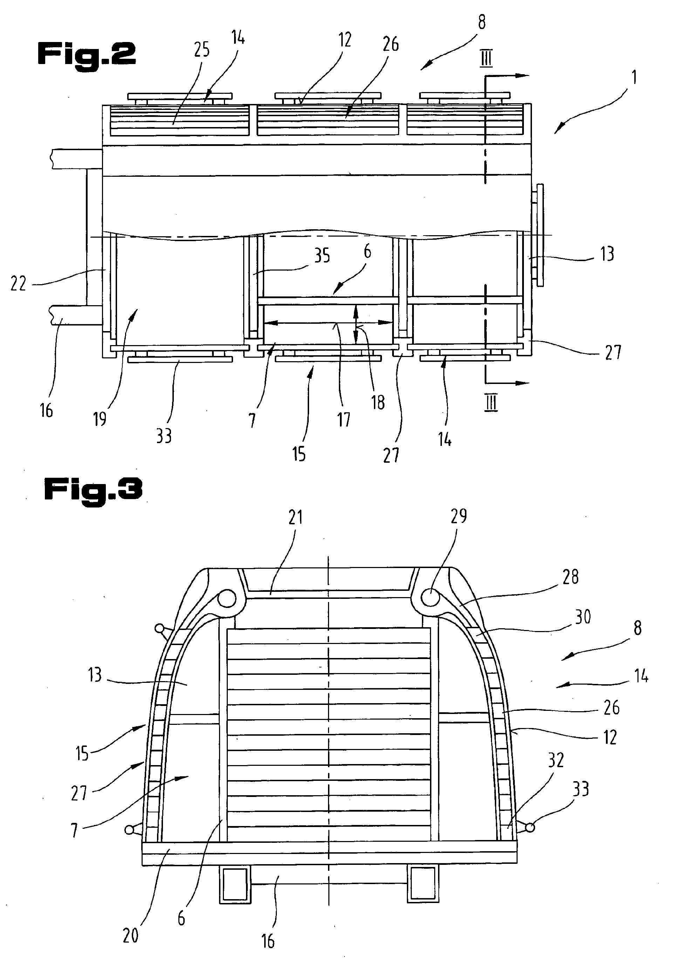

Im Detail ist in den Fig. 2 und 3 eine mögliche Ausbildung des Geräte- Aufbaus 8 gezeigt der auf einem Fahrzeugrahmen 16 über nicht weiter dargestellte Dämpfungs- und Befestigungselemente aufgelagert und befestigt ist.

Der kastenartige Geräte- Aufbau 8 weist einen durch die Trennelemente 6 in die Abteile 7, in unterschiedlichen Breiten 18 und Tiefen 19, unterteilten Innenraum 20 auf. Begrenzt wird der Innenraum 20 durch einen Boden 21 und einer Decke 22, einer Stirnwand 23 und der Rückwand 13. Insgesamt entspricht die Ausbildung des Geräte- Aufbaus 8 mit den Trennelementen 6 einer Spantbauweise und werden damit unterschiedlich dimensionierte Abteile 7, je nach einer beabsichtigten Bestückung mit Werkzeugen und Gerätschaften erreicht.

Der Geräte- Aufbau 8 weist nach dem gezeigten Ausführungsbeispiel in der, bevorzugt vom Boden 21 zur Decke 22 bogenförmig verlaufenden Seitenwand 12, mehrere der Bedienöffnungen 15 auf, die durch die Rollladensysteme 14 verschließbar sind. Möglich ist weiters auch eine durch das Rollladensystem 14 verschließbare Bedienöffnung 15 in der Rückwand 13 des Geräte- Aufbaus 8 vorzusehen.

Das Rollladensystem 14 umfasst einen durch gelenkig verbundene, in zum Boden paralleler Ausrichtung verlaufenden Lamellen 25 gebildeten und eine die Bedienöffnungen 15 beidseits des Rollladenpanzers 26 begrenzende Führungsanordnung 27 für die Lamellen 25. Weiters sind im Bereich der Decke 21 Umlenkführungen 28 und eine federvorgespannten Wickelwelle 29 mit der eine obere Endlamelle 30 des Rollladenpanzers 26 über biegeelastische Zugmittel 31, z.B. Bänder, Seile etc. verbunden ist. An einer dem Boden zugewandten Abschlusslamelle 32 ist eine Öffnungs- und Verschlusseinrichtung 33, wie sie noch später im Detail beschrieben wird, vorgesehen.

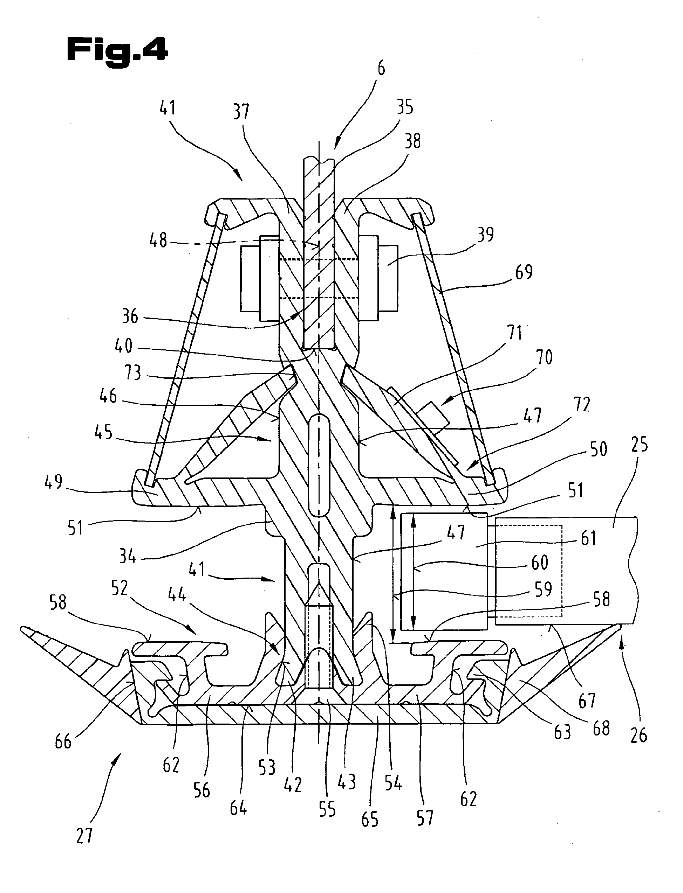

In der Fig. 4 ist die Führungsanordnung 27, ausgebildet für zwei unmittelbar benachbart angeordnete Rollladenpanzer 26 gezeigt. Diese besteht aus einem ersten Führungsprofil 34, das an einem Trennelement 6, z.B. einer den Innenraum unterteilenden Querwand 35, befestigt ist, wobei das Führungsprofil 34 einen stirnseitigen Randbereich 36 der Querwand 35 zwischen zwei Schenkeln 37, 38 aufnimmt und mittels die Querwand 35 und die Schenkeln 37, 38 durchragende Befestigungsmittel 39, z.B. Schrauben, Nieten etc., befestigt ist.

Das Führungsprofil 34, das im Wesentlichen eine Stirnfläche 40 der Querwand 33 überragt, weist an einem zu den Schenkeln 37, 38 eines Endbereiches 41 entgegen gesetzten weiteren Endbereich 41 weitere zueinander parallel verlaufende Schenkeln 42, 43 auf, deren Enden einen konisch erweiterten Randbereich 44 ausbilden. Ein Verbindungssteg 45 der die entgegengesetzten Randbereiche 41 verbindet, ist mit entgegengesetzt zu Seitenflächen 46, 47 in zu einer Mittelebene 48 senkrechten Richtung ausragenden, über eine Gesamtlänge des Führungsprofils 34 verlaufenden Führungsleisten 49, 50 versehen. Diese bilden über die Gesamtlänge des Führungsprofils 34 erstreckende Führungsbahnen 51 für die Anlage der unmittelbar benachbart vorgesehenen Rollladenpanzer 26 aus, d.h. dass die Profilausbildung mit den Führungsleisten 49, 50 und den Schenkeln 37, 38, 42, 43 bezüglich der Mittelebene symmetrisch ausgebildet ist.

Das erste Führungsprofil 34 ist bevorzugt aus Kunststoff, insbesondere aus PVC - hart und ist ausreichend elastisch um sich bei der Montage einfach an die bevorzugt bogenförmig - etwa mit einem Radius von 17 Meter - verlaufenden Stirnfläche 40 der Querwand 35 anzupassen. Selbstverständlich kommen auch andere ausreichend elastische, anpassbare Materialien in Frage.

Auf den Schenkeln 42, 43 des ersten Führungsprofil 34 ist durch eine federelastische Spreizwirkung ein weiteres Führungsprofil 52, das den Schenkeln 42, 43 des ersten Führungsprofils 34 zugewandt eine Aufnahmenut 53 aufweist, befestigt. Die Aufnahmenut 53 wird dabei durch über eine Gesamtlänge des Führungsprofils 52 symmetrisch zur Mittelebene 48 verlaufende, federelastische Halteflanken 54 gebildet. Zusätzlich sind zur Befestigung des weiteren Führungsprofils 52 über die Gesamtlänge dieses in einem Abstand längs der Mittelebene 48 Befestigungsschrauben 55 vorgesehen, die zusätzlich eine Spreizwirkung auf die Schenkeln 42, 43 des ersten Führungsprofils 34 ausüben und damit eine sichere Halterung für das weitere Führungsprofil 52 gewährleisten.

Ausgehend von dem mittleren Bereich des Führungsprofils 52 mit den Halteflanken 54 erstrecken sich senkrecht zur Mittelebene 48 in symmetrischer Anordnung und Ausbildung Führungsschenkeln 56, 57, die den Führungsleisten 49, 50 des ersten Führungsprofils 34 zugewandt und zu den Führungsbahnen 51 des ersten Führungsprofils 34 parallel verlaufende Führungsbahnen 58 für den Rollladenpanzer 26 ausbilden.

Ein Abstand 59 zwischen den Führungsbahnen 51 des ersten Führungsprofils 34 und den Führungsbahnen 58 des zweiten Führungsprofils 52 ist etwas größer als eine Breite 60 von Gleitsteinen 61, die in Endbereichen der Lamellen 25 des Rollladenpanzers 26 als Führungsmittel, aus einem Material mit einem geringen Reibbeiwert, angeordnet sind.

Dieses weitere Führungsprofil 52 ist bevorzugt aus Leichtmetall, insbesondere einer AL-Legierung, und weist im Gegensatz zu dem ersten Führungsprofil 34, das querschnittsbedingt ein hohes Widerstandsmoment um eine senkrecht zur Mittelebene 48 verlaufende Achse aufweist, ein vergleichsweise geringes Widerstandsmoment auf, wodurch es auch bei einer metallischen Ausführung an die bogenförmige Krümmung der Seitenwand anpassbar ist. Der Vorteil ist dabei der geringe Reibbeiwert des Materials wodurch der die Gleitsteine 61 aufweisende Rollladenpanzer 26 gut gleitet.

Die Führungsschenkeln 56, 57 des weiteren Führungsprofils 52 weisen an Seitenbereichen Rastnuten 62 auf, die sich über die Gesamtänge des Führungsprofils 52 erstrecken. Diese Rastnuten 62 dienen für den Eingriff von Haltewülsten 63 eines auf das Führungsprofil 52 aufsteckbaren und eine Oberseite 64 und damit die Befestigungsschrauben 55 überdeckenden Abschlussprofils 65, das bevorzugt aus Hart-PVC oder vergleichbar anpassbaren Materialien gebildet ist und das an entgegengesetzten Seitenflächen 66 in Richtung einer Oberfläche 67 der Rollladenpanzer 26 vorragende und an den Lamellen 25 anliegende Dichtlippen 68 angeordnet, die bevorzugt am Abschlussprofil 65 anextrudiert sind. Diese bestehen bevorzugt aus einem sehr elastischen Material, z.B. aus TPE oder einem ähnlich gut abdichtenden, eine geringe Gleitreibung aufweisenden Material.

Wie noch weiters der Fig. 4 zu entnehmen, ermöglicht die Profilierung des Führungsprofils 34, durch in einander gegen über liegenden Nuten in den Schenkeln 37, 38 und Führungsschenkeln 49, 50 einlegbare, bevorzugt transparente Abdeckstreifen 69 vorzusehen und damit geschützte Aufnahmebereiche 70 für LED-Leuchtenbänder 70 zur Beleuchtung der angrenzenden Abteile vorzusehen. Diese können insbesondere Trägerstreifen 71 montiert werden die an den Führungsschenkeln 49, 50 anextrudiert sind, wobei die Trägerstreifen 71 durch die Ausbildung einer Schwächungszone 72 aus ihrer für den Extrudiervorgang erforderlichen Ausgangslage in eine im Verbindungssteg 45 des Führungsprofil 34 vorgesehene Haltenut 63 zur Stabilisierung vor oder nach der Montage der LED- Leuchtenbänder 70 eingeklinkt werden.

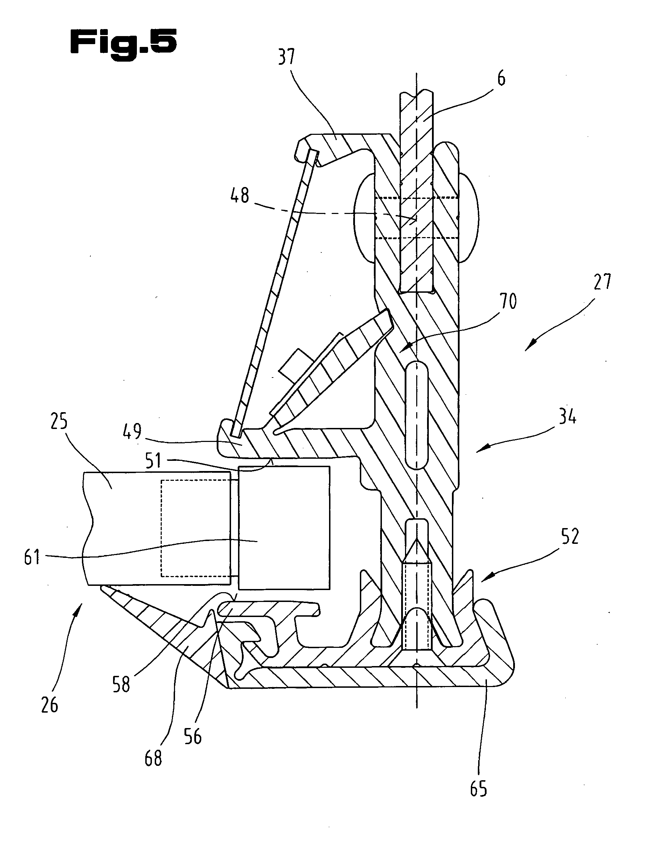

In der Fig. 5 ist eine weitere Ausbildung der Führungsanordnung 27, befestigt an dem Trennelement 6, gezeigt. Diese Führungsanordnung 27 bestehen aus einem bezogen auf die Mittelebene 48 unsymmetrisch ausgebildeten ersten Führungsprofil 34, unsymmetrischen weiteren Führungsprofil 52 und unsymmetrisch ausgebildeten Abschlussprofil 65 mit einer einseitig angeordneten Dichtlippe 68.

Diese Ausbildung bildet eine einseitige Führungsanordnung 27 für einen Rollladenpanzer 26 dem kein weiterer benachbart zugeordnet ist.

Damit ist diese Führungsanordnung 27, bei ansonst gleicher Ausbildung betreffend nur einer Führungsbahn 51 zur gleitenden Aufnahme des in die Lamelle 25 eingesetzten Gleitsteins 61 wie bereits vorhergehend zu der Fig. 4 beschrieben, ausgebildet.

Die Anwendung dieses hinsichtlich der Führungsausrichtung für den Rollladenpanzer 26 ausgebildeten Führungsanordnung 27 ist an Trennelementen 6 vorgesehen, insbesondere an Stirn- oder Rückwänden des Geräte- Aufbaus 8.

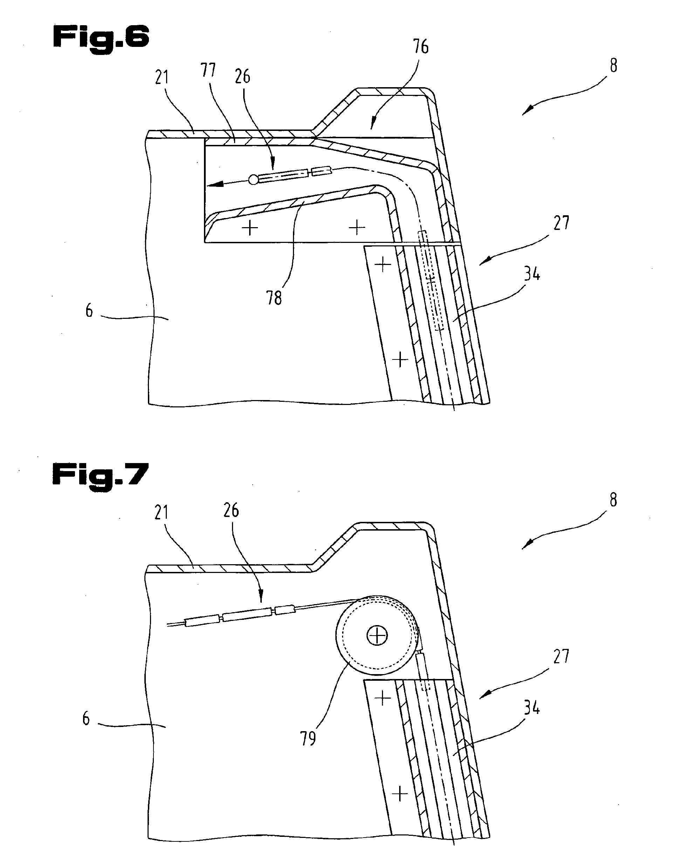

In den Fig. 6 und 7 sind im Bereich der Decke 21 des Geräte-Aufbaus 8 angeordnete Umlenkelemente 76 in zwei unterschiedlichen Ausbildungen für den nur schematisch dargestellten Führungspanzer 26 gezeigt. Diese sind jeweils am Trennelement 6 mund/oder der Decke 21. im Anschluss an das am Trennelement 6 angeordnete Führungsprofil 34 befestigt.

In der Fig. 6 ist das Umlenkelement 76, mittels der der Rollladenpanzer 26 ausgehend von der in etwa vertikal erfolgenden Verstellrichtung in annähernd waagrecht verlaufende Richtung geführt wird. Diese wird bevorzugt durch einen Kunststoff-Spritzteil gebildet und weist zwei bogenförmige, parallel in einem Abstand verlaufende Führungsleisten 77, 78 auf, zwischen denen der Rollladenpanzer 26 in Richtung einer nicht weiter dargestellten, federvorgespannten Wickelwelle geführt wird. Die Führungsleisten 77, 78 sind an einer am Trennelement befestigbaren Tragplatte 79 angeordnet und überragen die Tragplatte 79 zur gleitenden Aufnahme der in den Lamellen vorgesehenen Gleitsteine in Richtung des Rollladenpanzers 26. Bevorzugt sind die Umlenkelemente 76 mit den Führungsleisten 77, 78 einstückig aus Kunststoff gefertigt um der Verstellung einen geringen Reibungswiderstand entgegen zu setzen.

In der Fig. 7 ist eine andere Ausbildung des Umlenkelements 76 gezeigt. Nach dieser Ausbildung ist im Bereich der Decke 21 und im Anschluss an das Führungsprofil 34 eine um eine zu der Verstellrichtung der Rollladenpanzers 26 senkrecht verlaufende Achse drehbar gelagerte Umlenkrolle 79 angeordnet.

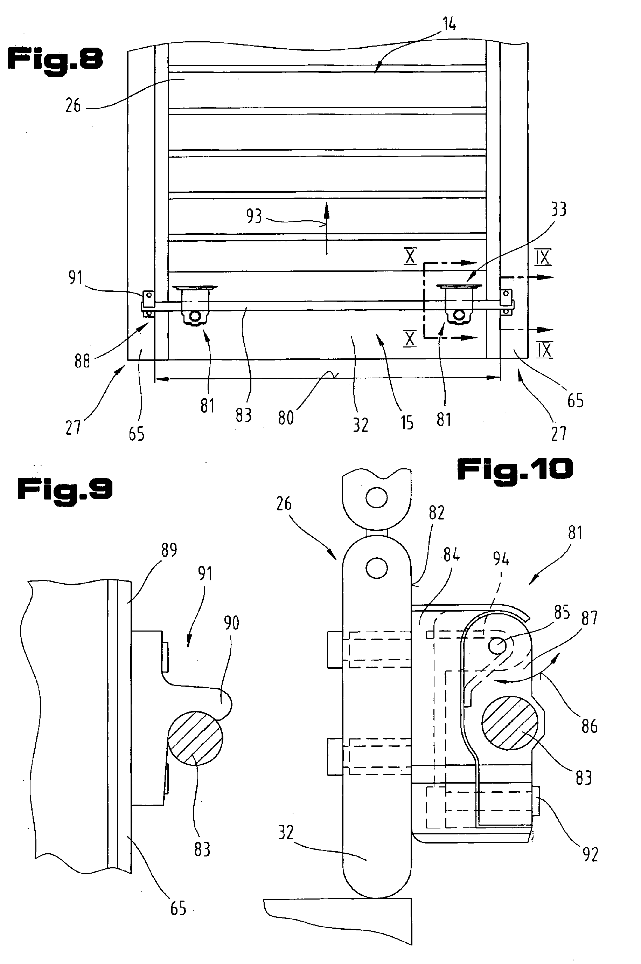

In den Fig. 8 bis 10 ist eine mögliche Ausbildung der Öffnungs- und Verschlusseinrichtung 33 des Rollladensystems 14 gezeigt.

Diese besteht aus zumindest zwei auf der Abschlusslamelle 32 des Rollladenpanzers 26 in Richtung einer Rollladenbreite 80 distanziert voneinander angeordnete, gegebenenfalls sperrbar ausgebildete Beschlagteile 81 die einer Außenseite 82 der Abschlusslamelle 32 vorgesetzt eine Griffstange 83 lagern.

Die Beschlagteile 81 bestehen im Wesentlichen aus einem auf der Abschlusslamelle 32 befestigten Basisteil 84 und einem an diesem um eine parallel zur Außenseite 82 verlaufende Schwenkachse 85 schwenkbar - gemäß Doppelpfeil 86 - gelagerten Gehäuseteil 87 der in einer Bohrung die Griffstange 83, beispielsweise ein Rohr oder eine Rundstange aus Metall oder Kunststoff, aufnimmt.

Die Griffstange 83 überragt die Rollladenbreite 80 beidseits, wobei Endbereiche 88 zumindest bereichsweise die Abschlussprofile 65 der Führungsanordnung 27 für den Rollladenpanzer 26 überdecken.

Auf einer Oberfläche 89 der Abschlussprofile 65 sind mit Haltenasen 90, die Griffstange 83 im geschlossenen Zustand des Rollladenpanzers 26 an einer Oberseite bereichsweise überragende, Riegelelemente 91 befestigt.

Das Öffnen des Rollladenpanzers 26 erfolgt durch ein Ausschwenken der Gehäuseteile 87 der Beschlagteile 81 durch Betätigung der Griffstange 83 wodurch diese aus dem Bereich der Haltenasen 90 gelangen und der Rollladenpanzer 26 mit Unterstützung der federvorgespannten Wickelwelle zur Freigabe der Bedienöffnung 15 verstellt wird.

Zumindest ein Beschlagteil 81 je Rollladenpanzer 26 ist mit einem mit Schlüssel betätigbaren Sperrschloss 92 versehen. Dieses ist im schwenkbaren Gehäuseteil 87 angeordnet und bewirkt in Sperrstellung eine Verriegelung mit dem Basisteil 84.

Damit ist ein Schwenken der Griffstange 83 aus dem Bereich der Haltenase 87 wirkungsvoll verhindert und damit ein missbräuchliches Verstellen des Rollladenpanzers 26 in Öffnungsrichtung - gemäß Pfeil 93 - für eine unbefugte Person nicht möglich.

Die schwenkbaren Gehäuseteile 86 sind über Rückstellfedern 94 mit dem Basisteil 84 wirkverbunden, wodurch im unbetätigten Zustand eine selbsttätige Rückstellung der Gehäuseteile 87 und damit der Griffstange 83 in die Schließstellung erfolgt.

Ferner wird noch darauf verwiesen, dass bei größeren Abmessungen der Rollladenbreite 80 zweckmäßig mehr als wie gezeigt zwei Beschlagteile 81 vorgesehen sein können.

Die angegebenen Materialien für die Führungen (34, 52), das Abschlussprofil (65) und Dichtlippe (68) sind nur beispielshaft zu verstehen und können selbstverständlich auch von den mechanischen Eigenschaften ähnliche Materialien zum Einsatz kommen.

Die Ausführungsbeispiele zeigen mögliche Ausführungsvarianten des Rollladensystems 14, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Rollladensystems 14 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

**Bezugszeichenaufstellung**

| | | | |
|---|---|---|---|
| 1 | Lastkraftwagen | 41 | Endbereich |
| 2 | Feuerwehr-Einsatzfahrzeug | 42 | Schenkel |
| 3 | Chassis | 43 | Schenkel |
| 4 | Fahrerkabine | 44 | Randbereich |
| 5 | Mannschaftskabine | 45 | Verbindungssteg |
| | | | |
| 6 | Trennelement | 46 | Seitenfläche |
| 7 | Abteil | 47 | Seitenfläche |
| 8 | Geräte-Aufbau | 48 | Mittelebene |
| 9 | Tür | 49 | Führungsleiste |
| 10 | Ein- und Ausstiegsmittel | 50 | Führungsleiste |
| | | | |
| 11 | Öffnungsverschluss | 51 | Führungsbahn |
| 12 | Seitenwand | 52 | Führungsprofil |
| 13 | Rückwand | 53 | Aufnahmenut |
| 14 | Rollladensystem | 54 | Halteflanke |
| 15 | Bedienöffnung | 55 | Befestigungsschraube |
| | | | |
| 16 | Fahrzeugrahmen | 56 | Führungsschenkel |
| 17 | Breite | 57 | Führungsschenkel |
| 18 | Tiefe | 58 | Führungsbahn |
| 19 | Innenraum | 59 | Abstand |
| 20 | Boden | 60 | Breite |
| | | | |
| 21 | Decke | 61 | Gleitstein |
| 22 | Stirnwand | 62 | Rastnut |
| 23 | | 63 | Haltewulst |
| 24 | | 64 | Oberseite |
| 25 | Lamelle | 65 | Abschlussprofil |
| | | | |
| 26 | Rollladenpanzer | 66 | Seitenfläche |
| 27 | Führungsanordnung | 67 | Oberfläche |
| 28 | Umlenkführung | 68 | Dichtlippe |
| 29 | Wickelwelle | 69 | Abdeckstreifen |
| 30 | Endlamelle | 70 | LED-Leuchtenband |
| | | | |
| 31 | Zugmittel | 71 | Trägerstreifen |
| 32 | Abschlusslamelle | 72 | Schwächungszone |
| 33 | Öffnungs- und Verschlusseinrichtung | 73 | Haltenut |
| | | 74 | |
| 34 | Führungsprofil | 75 | |
| 35 | Querwand | | |
| | | 76 | Umlenkelement |
| 36 | Randbereich | 77 | Führungsleiste |
| 37 | Schenkel | 78 | Führungsleiste |
| 38 | Schenkel | 79 | Umlenkrolle |
| 39 | Befestigungsmittel | 80 | Rollladenbreite |
| 40 | Stirnfläche | | |
| 81 | Beschlagteil | | |
| 82 | Außenseite | | |
| 83 | Griffstange | | |
| 84 | Basisteil | | |
| 85 | Schwenkachse | | |
| | | | |
| 86 | Doppelpfeil | | |
| 87 | Gehäuseteil | | |
| 88 | Endbereich | | |
| 89 | Oberfläche | | |
| 90 | Haltenase | | |
| | | | |
| 91 | Riegelelement | | |
| 92 | Sperrschloss | | |
| 93 | Pfeil | | |
| 94 | Rückstellfeder | | |

## Patentansprüche

1. Rollladensystem (14) für einen Kraftfahrzeug-Aufbau, insbesondere für ein Feuerwehr- Einsatzfahrzeug (2), mit einem durch miteinander gelenkig verbundenen Lamellen (25) gebildeten Rollladenpanzer (26), mit zwischen einem Boden (20) bis nahe einer Decke (21) eines Geräte- Aufbaus (8) erstreckenden Führungsanordnungen (27) beidseite des Rollladenpanzers (26) und anschließenden Umlenkelementen (76) und mit einer im Bereich der Decke (21) den Umlenkelementen (76) nach geordneten Wickelwelle (29) und mit einer Öffnungs- und Verriegelungseinrichtung (33) an einer dem Boden (20) zugewandten Abschlusslamelle (32), **dadurch gekennzeichnet, dass** die Führungsanordnung (27) aus einem ersten, mit dem Geräte-Aufbau (8) verbundenem und zumindest eine Führungsbahn (51) ausbildenden Führungsprofil (34) und einem weiteren Führungsprofil (52) gebildet ist, das mit dem ersten Führungsprofil (34) lösbar verbunden ist, und am weiteren Führungsprofil (52) ein mit zumindest einer elastischen Dichtlippe (68) die Lamellen (25) in einem Stirnendbereich überdeckendes Abschlussprofil (65) angeordnet ist.

2. Rollladensystem (14) nach Anspruch 1, **dadurch gekennzeichnet, dass** die Führungsprofile (34, 52) und das Abschlussprofil (65) bezogen auf eine Mittelebene (48) symmetrisch ausgebildet sind.

3. Rollladensystem (14) nach Anspruch 1, **dadurch gekennzeichnet, dass** die Führungsprofile (34, 52) und das Abschlussprofil (65) bezogen auf die Mittelebene (48) asymmetrisch ausgebildet sind.

4. Rollladensystem (14) nach Anspruch 1, **dadurch gekennzeichnet, dass** das erste Führungsprofil (34) an entgegen gesetzten Endbereichen (41) jeweils ein Paar von zueinander und zur Mittelebene parallel ausgerichtete Schenkeln (37, 38, 42, 43) aufweist.

5. Rollladensystem (14) nach Anspruch 4, **dadurch gekennzeichnet, dass** die Schenkeln (37, 38, 42, 43) voneinander gering beabstandet sind.

6. Rollladensystem (14) nach Anspruch 1, **dadurch gekennzeichnet, dass** die Führungsbahnen (51, 58) der Führungsprofile (34, 52) durch in einer senkrecht zur Mittelebene (48) verlaufenden Ebene ausgerichteten Führungsleisten (49, 50) und Führungsschenkeln (56, 57), die zwischen sich einen Abstand (59) aufweisen, gebildet sind.

7. Rollladensystem (14) nach Anspruch 1, **dadurch gekennzeichnet, dass** das weitere Führungsprofil (52) über eine Aufnahmenut (53) ausbildende Halteflanken (54) am ersten Führungsprofil (34) lösbar befestigt ist.

8. Rollladensystem (14) nach Anspruch 1, **dadurch gekennzeichnet, dass** das Abschlussprofil (65) am weiteren Führungsprofil (52) über Haltewülste (63) lösbar befestigt ist.

9. Rollladensystem (14) nach einem der vorhergehenden Ansprüche, **dadurch gekennzeichnet, dass** das erste Führungsprofil (34) bevorzugt aus Kunststoff, z.B. Hart- PVC, gebildet ist.

10. Rollladensystem (14) nach einem der vorhergehenden Ansprüche, **dadurch gekennzeichnet, dass** das weitere Führungsprofil (52) bevorzugt aus Leichtmetall, z.B. einer AL- Legierung, gebildet ist.

11. Rollladensystem (14) nach einem der vorhergehenden Ansprüche, **dadurch gekennzeichnet, dass** das Abschlussprofil (65) bevorzugt aus Kunststoff, z.B. Hart- PVC, gebildet ist.

12. Rollladensystem (14) nach einem der vorhergehenden Ansprüche, **dadurch gekennzeichnet, dass** die am Abschlussprofil (65) bevorzugt angeformte Dichtlippe (68) aus Kunststoff, z.B. PET, gebildet ist.

13. Rollladensystem (14) nach Anspruch 1, **dadurch gekennzeichnet, dass** die Öffnungs- und Verschlusseinrichtung (33) durch zumindest zwei an einer des Rollladenpanzers (26) angeordnete Beschlagteile (81) und einer über zumindest eine Rollladenbreite (86) erstreckende Griffstange (83) gebildet ist.

14. Rollladensystem (14) nach Anspruch 13, **dadurch gekennzeichnet, dass** die Beschlagteile (81) durch einen auf einer Außenseite (82) der Abschlusslamelle (32) befestigten Basisteil (84) und einen am Basisteil (84) schwenkbar angeordneten, die Griffstange (83) halternden Gehäuseteil (87) gebildet ist.

15. Rollladensystem (14) nach Anspruch 14, **dadurch gekennzeichnet, dass** im Gehäuseteil (87) ein bevorzugt mit einem Schlüssel sperrbares Sperrschloss (92) angeordnet ist.

## Claims

1. Roller shutter system (14) for a motor vehicle body, in particular for a fire brigade vehicle (2), with a roller shutter armor (26) formed by slats (25) connected in an articulated manner to one another with guide arrangements (27) extending on both sides of the roller shutter armor (26) between a floor (20) virtually as far as a ceiling (21) of a machine body (8) and subsequent deflection elements (76) and with a winding shaft (29) being arranged downstream of the deflection elements (76) in the region of the ceiling (21) and with an opening and locking device (33) on an end slat (32) facing the floor (20), **characterized in that** the guide arrangement (27) is formed by a first guide profile (34) which is connected to the machine body (8) and forms at least one guide track (51) and a further guide profile (52) that is detachably connected to the first guide profile (34), and an end profile (65) covering the slats (25) in an end region by means of at least one elastic sealing lip (68) is arranged on the further guide profile (52).

2. Roller shutter system (14) according to claim 1, **characterized in that** the guide profiles (34, 52) and the end profile (65) are embodied to be symmetrical with respect to a center plane (48).

3. Roller shutter system (14) according to claim 1, **characterized in that** the guide profiles (34, 52) and the end profile (65) are embodied to be asymmetrical with respect to the center plane (48).

4. Roller shutter system (14) according to claim 1, **characterized in that** the first guide profile (34) has a pair of legs (37, 38, 42, 43) being aligned parallel to one another and to the center plane at each opposite end region (41).

5. Roller shutter system (14) according to claim 4, **characterized in that** the legs (37, 38, 42, 43) have low distances to one another.

6. Roller shutter system (14) according to claim 1, **characterized in that** the guide tracks (51, 58) of the guide profiles (34, 52) are formed from guiding rails (49, 50) and guide legs (56, 57) that extend in a plane perpendicular to the center plane (48) and that have a distance (59) between one another.

7. Roller shutter system (14) according to claim 1, **characterized in that** the further guide profile (52) is detachably connected to the first guide profile (34) by means of retaining edges (54) forming a holding groove (53).

8. Roller shutter system (14) according to claim 1, **characterized in that** the end profile (65) is detachably connected to the further guide profile (52) by means of holding beads (63).

9. Roller shutter system (14) according to any of the preceding claims, **characterized in that** the first guide profile (34) is preferably made of plastics, e.g. hard-PVC.

10. Roller shutter system (14) according to any of the preceding claims, **characterized in that** the further guide profile (52) is preferably made of light metal, e.g. an AL-alloy.

11. Roller shutter system (14) according to any of the preceding claims, **characterized in that** the end profile (65) is preferably made of plastics, e.g. hard-PVC.

12. Roller shutter system (14) according to any of the preceding claims, **characterized in that** the sealing lip (68) preferably integrally formed with the end profile (65) is made of plastics, e.g. of PET.

13. Roller shutter system (14) according to claim 1, **characterized in that** the opening and closing device (33) is formed by at least two fittings (81) being disposed at an end slat (32) of the roller shutter armor (26) and one grab bar (83) extending across at least a width of shutter (86) .

14. Roller shutter system (14) according to claim 13, **characterized in that** the fittings (81) are formed by a base part (84) being fastened to an outer face (82) of the end slat (32) and a housing part (87) being disposed at a base part (84) in a pivoted way and holding the grab bar (83).

15. Roller shutter system (14) according to claim 14, **characterized in that** a lockable blocking lock (92) that can be locked by means of a key is disposed in the housing part (87).

## Revendications

1. Système de volet roulant (14) pour une structure carrossée d'un véhicule automobile, en particulier pour un véhicule d'intervention des pompiers (2), comportant un tablier de volet (26), constitué par des lames (25) reliées entre elles de manière articulée, comportant des dispositifs de guidage (27) de part et d'autre du tablier de volet (26), lesquels s'étendent à partir d'un plancher (20) jusqu'à proximité d'une paroi supérieure (21) d'une structure carrossée (8), et des éléments de renvoi (76) situés dans le prolongement, et comportant un arbre d'enroulement (29), monté dans la zone de la paroi supérieure (21) en aval des éléments de renvoi (76), et comportant un dispositif d'ouverture et de verrouillage (33) sur une lame finale (32) orientée vers le plancher (20), **caractérisé en ce que** le dispositif de guidage (27) est constitué par un premier profilé de guidage (34), relié à la structure carrossée (8) et formant au moins une voie de guidage (51), et par un profilé de guidage (52) supplémentaire, qui est relié de manière amovible au premier profilé de guidage (34), et sur ledit profilé de guidage (52) supplémentaire est disposé un profilé final (65) muni d'au moins une lèvre d'étanchéité (68) élastique et recouvrant les lames (25) dans une zone d'extrémité frontale.

2. Système de volet roulant (14) selon la revendication 1, **caractérisé en ce que** les profilés de guidage (34, 52) et le profilé final (65) sont réalisés symétriquement par rapport à un plan médian (48).

3. Système de volet roulant (14) selon la revendication 1, **caractérisé en ce que** les profilés de guidage (34, 52) et le profilé final (65) sont réalisés asymétriquement par rapport au plan médian (48).

4. Système de volet roulant (14) selon la revendication 1, **caractérisé en ce que** le premier profilé de guidage (34) comporte, sur des zones d'extrémité (41) opposées, respectivement une paire de branches (37, 38, 42, 43) orientées parallèlement entre elles et parallèlement au plan médian.

5. Système de volet roulant (14) selon la revendication 4, **caractérisé en ce que** les branches (37, 38, 42, 43) sont faiblement écartées les unes des autres.

6. Système de volet roulant (14) selon la revendication 1, **caractérisé en ce que** les voies de guidage (51, 58) des profilés de guidage (34, 52) sont formées par des lattes de guidage (49, 50) et par des branches de guidage (56, 57), qui sont alignées dans un plan perpendiculaire au plan médian (48) et qui sont écartées entre elles selon une distance (59).

7. Système de volet roulant (14) selon la revendication 1, **caractérisé en ce que** le profilé de guidage (52) supplémentaire est fixé de manière amovible au premier profilé de guidage (34) par l'intermédiaire de flancs de retenue (54) formant une rainure de réception (53).

8. Système de volet roulant (14) selon la revendication 1, **caractérisé en ce que** le profilé final (65) est fixé de manière amovible sur le profilé de guidage (52) supplémentaire par l'intermédiaire de renflements de retenue (63).

9. Système de volet roulant (14) selon l'une quelconque des revendications précédentes, **caractérisé en ce que** le premier profilé de guidage (34) est réalisé de préférence en matière plastique, telle qu'un PVC dur.

10. Système de volet roulant (14) selon l'une quelconque des revendications précédentes, **caractérisé en ce que** le profilé de guidage (52) supplémentaire est réalisé de préférence en métal léger, tel qu'un alliage d'aluminium.

11. Système de volet roulant (14) selon l'une quelconque des revendications précédentes, **caractérisé en ce que** le profilé final (65) est réalisé de préférence en matière plastique, telle qu'un PVC dur.

12. Système de volet roulant (14) selon l'une quelconque des revendications précédentes, **caractérisé en ce que** la lèvre d'étanchéité (68), formée de préférence sur le profilé final (65), est réalisée dans une matière plastique, telle qu'un polyéthylène.

13. Système de volet roulant (14) selon la revendication 1, **caractérisé en ce que** le dispositif d'ouverture et de verrouillage (33) est constitué par au moins deux ferrures (81) disposées sur au moins un tablier de volet (26), et par une tige de manoeuvre (83) qui s'étend sur au moins une largeur de volet (86).

14. Système de volet roulant (14) selon la revendication 13, **caractérisé en ce que** les ferrures (81) sont constituées par une partie de base (84), fixée sur un côté extérieur (82) de la lame finale (32), et par une partie formant boîtier (87), montée pivotante sur la partie de base (84) et maintenant la tige de manoeuvre (83).

15. Système de volet roulant (14) selon la revendication 14, **caractérisé en ce qu'**un verrou (92), destiné à être fermé de préférence au moyen d'une clé, est disposé sur la partie formant boîtier (87).
